# FASCICULE DE BREVET EUROPEEN

(11) **EP 4 378 833 B1**
(45) Date de publication et mention de la délivrance du brevet: **11.06.2025**
(21) Numéro de dépôt: 23212191.3
(22) Date de dépôt: 27.11.2023
(51) Int. Cl.: B64D 27/24, B64D 29/06, B64D 35/08, B64D 27/40, B60L 50/70

(54) **ENSEMBLE PROPULSIF À HÉLICE POUR AÉRONEF**
PROPELLERANTRIEBSANORDNUNG FÜR EIN FLUGZEUG
PROPELLER PROPULSION ASSEMBLY FOR AIRCRAFT

(30) Priorité: 30.11.2022 FR 2212579
(43) Date de publication de la demande: 05.06.2024
(73) Titulaire: AIRBUS OPERATIONS, 31060 Toulouse Cedex 9 (FR)
(72) Inventeur: CASSAGNE, Jérôme, 31060 TOULOUSE (FR); VINCHES, Frédéric, 31060 TOULOUSE (FR); CZAPLA, Lionel, 31060 TOULOUSE (FR); FUKASAKU, Kotaro, 31060 TOULOUSE (FR); AMARGIER, Rémi, 31060 TOULOUSE (FR)
(74) Mandataire: Cabinet Le Guen Maillet

(56) Documents cités:
- US-A- 5 106 035
- US-A1- 2011 174 919
- US-A1- 2021 078 719
- US-A1- 2022 219 826
- US-A1- 2022 355 942
- US-A1- 2022 371 743
- US-B2- 11 420 757

## Description

### DOMAINE TECHNIQUE

La présente invention concerne un ensemble propulsif à hélice pour un aéronef, ledit ensemble propulsif comprenant un châssis en T fixé à une structure d'une voilure de l'aéronef et un système de propulsion constitué de plusieurs équipements fixés audit châssis en T. L'invention concerne également un aéronef comportant au moins un tel ensemble propulsif.

### ÉTAT DE LA TECHNIQUE ANTÉRIEURE

Afin de se déplacer, un aéronef comporte classiquement au moins un ensemble propulsif comprenant un système de propulsion arrangé dans une nacelle. Le système de propulsion comporte un châssis, un moteur fixé au châssis et une hélice entraînée en rotation par le moteur. Le châssis de la nacelle est fixé sous un mât qui est lui-même fixé sous une structure de la voilure de l'aéronef.

Le système de propulsion, et plus particulièrement le moteur, comporte de nombreux éléments qui sont fixés soit au mât, soit au châssis, et ces éléments sont généralement imbriqués de manière complexe à l'intérieur du châssis qui comporte des barres de renfort extérieures qui sont autour des éléments et rendent difficile l'accès auxdits éléments.

Lors des opérations de maintenance de l'ensemble propulsif, le démontage des éléments peut être complexe du fait de la présence des barres de renfort.

Le document US-A-2021/078719 divulgue un ensemble propulsif de l'état de la technique.

### EXPOSÉ DE L'INVENTION

Un objet de la présente invention est de proposer un ensemble propulsif qui permet un accès aisé aux éléments constituant le système de propulsion.

À cet effet, est proposé un ensemble propulsif pour un aéronef présentant une direction longitudinale et comportant :
- un châssis présentant un profil en T avec une structure horizontale et une structure verticale,
- une boîte de vitesse comprenant un arbre de sortie, ledit arbre de sortie portant une hélice, la boite de vitesse étant fixée à l'avant du châssis par des premiers moyens de fixation, et
- un système de propulsion comportant au moins les éléments propulsifs suivants : au moins un moteur électrique, chacun des au moins un moteur électrique ayant un arbre moteur mécaniquement couplé à la boîte de vitesse, au moins une pile à combustible configurée pour alimenter électriquement ledit au moins un moteur électrique, et au moins un réservoir configuré pour alimenter en dihydrogène ladite au moins une pile à combustible, où les éléments propulsifs sont fixés sous la structure horizontale et contre la structure verticale par des deuxièmes moyens de fixation.

Avec un tel arrangement, il est facile d'accéder à chaque élément propulsif par le côté du châssis lors des opérations de maintenance.

Avantageusement, il y a un seul réservoir fixé sous la structure horizontale au niveau d'une extrémité arrière de ce dernier.

Avantageusement, il y a un premier moyen de fixation fixé entre la boîte de vitesse et une extrémité basse de la structure verticale et, de part et d'autre de la structure verticale, un premier moyen de fixation fixé entre la boîte de vitesse et la structure horizontale.

Avantageusement, l'ensemble propulsif comporte des points latéraux de fixation solidaires d'une surface supérieure de la structure horizontale et destinés à assurer la fixation de la structure horizontale à une structure d'une aile de l'aéronef, une bielle bâbord et une bielle tribord où les bielles sont arrangées à la verticale des points latéraux de fixation, où la bielle bâbord est fixée entre une extrémité bâbord de la structure horizontale au niveau d'une surface inférieure de la structure horizontale et une surface latérale bâbord de la structure verticale et où la bielle tribord est fixée entre une extrémité tribord de la structure horizontale au niveau d'une surface inférieure de la structure horizontale et une surface latérale tribord de la structure verticale.

Avantageusement, l'ensemble propulsif comporte de part et d'autre du châssis, au moins un capot latéral monté mobile en rotation sur la structure horizontale autour d'un axe de pivot et pour chaque capot latéral, l'ensemble propulsif comporte des charnières dont une partie fixe est solidaire de la structure horizontale et une partie mobile solidaire du capot latéral.

Avantageusement, l'ensemble propulsif comporte de part et d'autre de la structure verticale, des arches qui sont réparties le long des bords bâbord et tribord de la structure horizontale et où chacune présente une première extrémité fixée au bord bâbord ou tribord de la structure horizontale et une deuxième extrémité fixée à une extrémité basse de la structure verticale au niveau d'une surface latérale bâbord ou tribord de la structure verticale.

Avantageusement, certaines arches sont disposées de manière à se trouver entre deux éléments propulsifs parallèlement au bord bâbord ou tribord de la structure horizontale, et une paroi coupe-feu est mise en place à l'intérieur desdites certaines arches.

Selon un mode de réalisation particulier, l'ensemble propulsif comporte un capot supérieur fixé sur le châssis entre les capots latéraux.

Avantageusement, l'ensemble propulsif comporte un plancher fixé au niveau d'une extrémité basse de la structure verticale, parallèlement à la structure horizontale et à l'opposé de ce dernier par rapport à la structure verticale.

Avantageusement, l'ensemble propulsif comporte quatre points de fixation répartis par paire à bâbord et à tribord, et l'un devant l'autre pour chaque paire, chaque point de fixation prenant la forme d'une manille, où chaque manille correspondant à un point avant de fixation est montée articulée par un point avant d'articulation de la structure horizontale et destinée à être montée articulée par un point avant d'articulation à la structure de l'aile, où chaque point avant d'articulation consiste en une rotation autour d'un axe de rotation parallèle à la direction longitudinale, où chaque manille correspondant à un point arrière de fixation est montée articulée par deux points arrière d'articulation de la structure horizontale et destinée à être montée articulée par un point arrière d'articulation à la structure de l'aile, et où chaque point arrière d'articulation consiste en une rotation autour d'un axe horizontal de rotation présentant un angle non nul avec la direction longitudinale.

L'invention propose également un aéronef comportant au moins un ensemble propulsif selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef comportant un ensemble propulsif selon l'invention,
[Fig. 2] est une vue en perspective d'un ensemble propulsif selon l'invention,
[Fig. 3] est une vue de côté de l'ensemble propulsif selon l'invention,
[Fig. 4] est une vue en coupe de l'ensemble propulsif de la Fig. 3 selon la ligne IV-IV,
[Fig. 5] est une vue en coupe de l'ensemble propulsif de la Fig. 3 selon la ligne V-V,
[Fig. 6] est une vue en coupe de l'ensemble propulsif de la Fig. 3 selon la ligne VI-VI,
[Fig. 7] est une vue en coupe de l'ensemble propulsif de la Fig. 3 selon la ligne VII-VII,
[Fig. 8] est une vue en perspective d'un ensemble propulsif selon une variante de réalisation de l'invention,
[Fig. 9] est une vue de côté de l'ensemble propulsif de la Fig. 8, et
[Fig. 10] est une représentation schématique d'un mode d'installation d'une boîte de vitesse de l'ensemble propulsif.

### EXPOSÉ DÉTAILLÉ DE MODES DE RÉALISATION

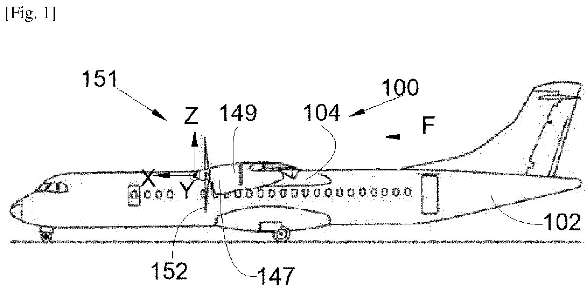

Dans la description qui suit, les termes relatifs à une position sont pris en référence à un aéronef en position d'avancement, c'est-à-dire comme il est représenté sur la Fig. 1 où la flèche F montre la direction d'avancement de l'aéronef.

La Fig. 1 montre un aéronef 100 qui présente un fuselage 102 de part et d'autre duquel est fixée une aile 104. Sous chaque aile 104 est fixé au moins un ensemble propulsif 151 qui comporte une nacelle 149 constituée de capots 147 formant une surface extérieure aérodynamique.

L'ensemble propulsif 151 comporte un système de propulsion logé à l'intérieur de la nacelle 149 et une hélice 152.

Dans la description qui suit, et par convention, on appelle X la direction longitudinale qui correspond à l'axe de rotation de l'hélice 152 orienté positivement vers l'avant dans le sens d'avancement de l'aéronef, on appelle Y la direction transversale qui est horizontale lorsque l'aéronef est au sol, et Z la direction verticale ou hauteur verticale lorsque l'aéronef est au sol, ces trois directions X, Y et Z étant orthogonales entre elles.

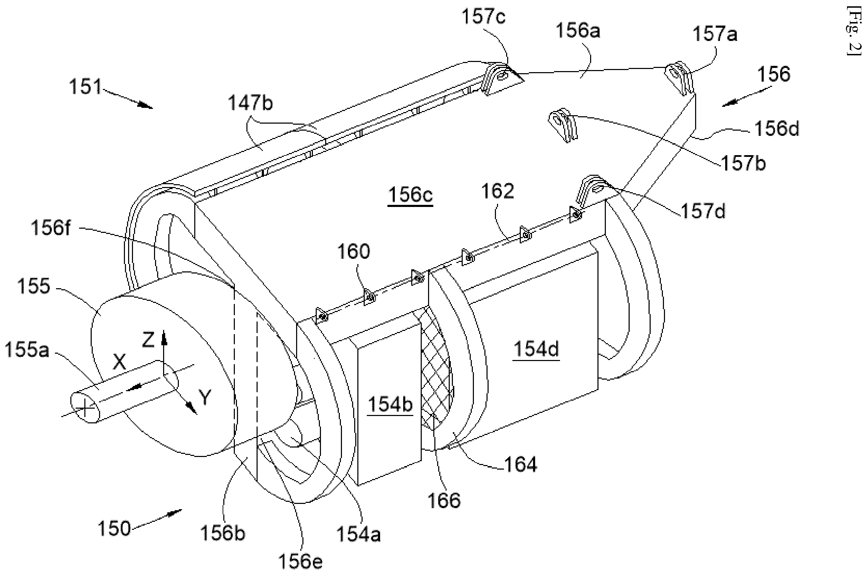

La Fig. 2 montre l'ensemble propulsif 151 sans la nacelle 149 et sans l'hélice 152 et qui comporte également le système de propulsion 150. L'ensemble propulsif 151 présente une direction longitudinale parallèle à la direction longitudinale X, une direction transversale parallèle à la direction transversale Y et une direction verticale parallèle à la direction verticale Z.

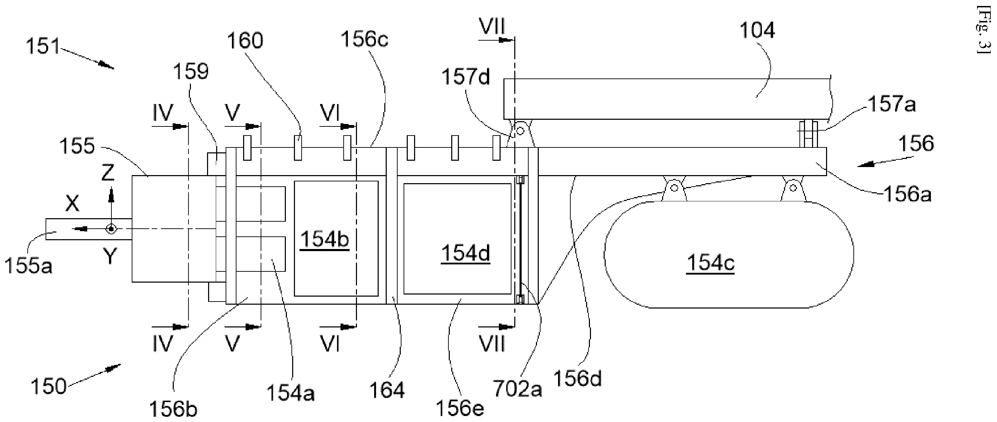

La Fig. 3 montre l'ensemble propulsif 151 en vue de côté.

L'ensemble propulsif 151 comporte une boîte de vitesse 155 dont l'arbre de sortie 155a porte l'hélice 152.

Le système de propulsion 150 comporte au moins un moteur électrique 154a où chacun des au moins un moteur électrique 154a comprend un arbre moteur mécaniquement couplé à la boîte de vitesse 155 pour entraîner les composants (engrenages) de la boîte de vitesse 155 et ainsi faire tourner l'arbre de sortie 155a de la boîte de vitesse 155 et l'hélice 152.

L'ensemble propulsif 151 comporte également un châssis 156 qui présente un profil en T s'étendant parallèlement à la direction longitudinale X et comportant une structure horizontale 156a, telle qu'un plateau, et une structure verticale 156b, telle qu'une paroi, qui est disposée sous la structure horizontale 156a de manière globalement centrée. La structure horizontale 156a est globalement parallèle à un plan horizontal XY et la structure verticale 156b est globalement parallèle à un plan vertical XZ.

La structure horizontale 156a constitue un mât fixé à une structure de l'aile 104 par des points de fixation 157a-d solidaires d'une surface supérieure 156c de la structure horizontale 156a et qui sont ici au nombre de quatre. Il y a un point arrière de fixation 157a qui est disposé à l'arrière de la structure horizontale 156a et compense les efforts en Z. Il y a un point avant de fixation 157b qui est à l'avant du point arrière de fixation 157a et qui compense les efforts Y. Il y a deux points latéraux de fixation 157c-d disposés de part et d'autre du point avant de fixation 157b et chacun compense les efforts en X et Z. Ces différents points de fixation prennent toutes formes connues de l'homme du métier. Dans le mode de réalisation de l'invention présenté ici, chaque point de fixation 157a-d comprend une chape femelle solidaire de la structure horizontale 156a et d'une chape mâle solidaire de la structure de l'aile 104 et montée articulée dans la chape femelle. Le point arrière de fixation 157a et le point avant de fixation 157b sont alignés sur un plan médian vertical XZ de la structure horizontale 156a et les points latéraux de fixation 157c-d sont disposés symétriquement de part et d'autre du plan médian vertical XZ.

Dans le cas d'un aéronef 100 utilisant des piles à combustible, le système de propulsion 150 comporte également des piles à combustible 154b, et au moins un réservoir 154c contenant du dihydrogène pour alimenter chacune des piles à combustible 154b afin de produire de l'électricité pour alimenter le ou les moteurs électriques 154a. Selon le cas, le système de propulsion 150 peut comporter d'autres éléments comme par exemple un système de refroidissement 154d des systèmes d'approvisionnement en air, ...

Le système de propulsion 150 comporte ainsi, dans le mode de réalisation présenté ici, de l'avant vers l'arrière, au moins les éléments propulsifs suivants : les moteurs électriques 154a, les piles à combustible 154b, le système de refroidissement 154d et le réservoir 154c.

Classiquement, chaque pile à combustible 154b est alimentée en air et en dihydrogène depuis le réservoir 154c pour générer de l'électricité qui alimente au moins un moteur électrique 154a. Le système de refroidissement 154d est conçu pour refroidir les différents éléments du système de propulsion 150. Ces différents éléments 154a-d sont connus de l'homme du métier et ne sont pas décrits plus précisément. Les différents câbles, conduites, etc., qui relient les différents éléments 154a-d entre eux ne sont pas représentés.

Ces différents éléments propulsifs 154a-c sont fixés sous la structure horizontale 156a au niveau d'une surface inférieure 156d et contre la structure verticale 156b par des moyens de fixation dits deuxièmes moyens de fixation au niveau de surfaces latérales bâbord 156e ou tribord 156f. Du fait de la forme en T du châssis 156, les éléments 154a-c peuvent être répartis de part et d'autre de la structure verticale 156b. Les deuxièmes moyens de fixation peuvent prendre différentes formes. Il peut s'agir de système à chape, de système vis-écrou ou tout autre système. Dans le mode de réalisation de l'invention présenté ici, le système de refroidissement 154d est également fixé sous la structure horizontale 156a au niveau d'une surface inférieure 156d et contre la structure verticale 156b par des deuxièmes moyens de fixation.

L'accès aux éléments 154a-d est ainsi facilité car il n'y a aucun élément structurel sur les côtés et un agent de maintenance peut ainsi avoir rapidement accès aux différents éléments propulsifs 154a-d par le côté du châssis 156.

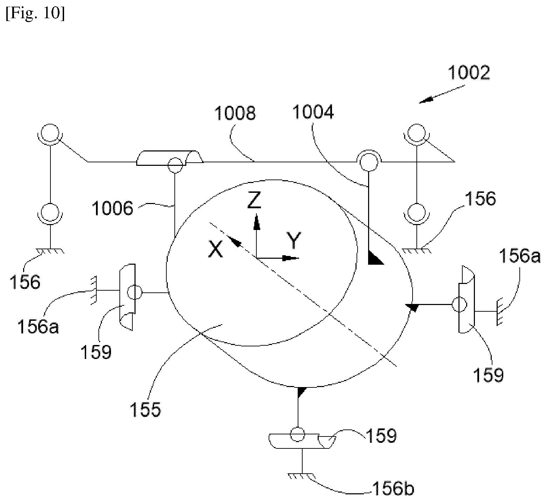

La boîte de vitesse 155 est fixée à l'avant du châssis 156 par des premiers moyens de fixation 159 dont un mode de réalisation est représenté à la Fig. 10 qui est décrite ci-dessous.

Dans le mode de réalisation de l'invention présenté à la Fig. 3, il y a un seul réservoir 154c qui est fixé à la surface inférieure 156d sous la structure horizontale 156a au niveau d'une extrémité arrière de ce dernier. Pour permettre la mise en place du réservoir 154c au milieu de la structure horizontale 156a, la structure verticale 156b est réduite au niveau de l'emplacement du réservoir 154c. La fixation du réservoir 154c à la structure horizontale 156a est assurée ici par des systèmes à chape.

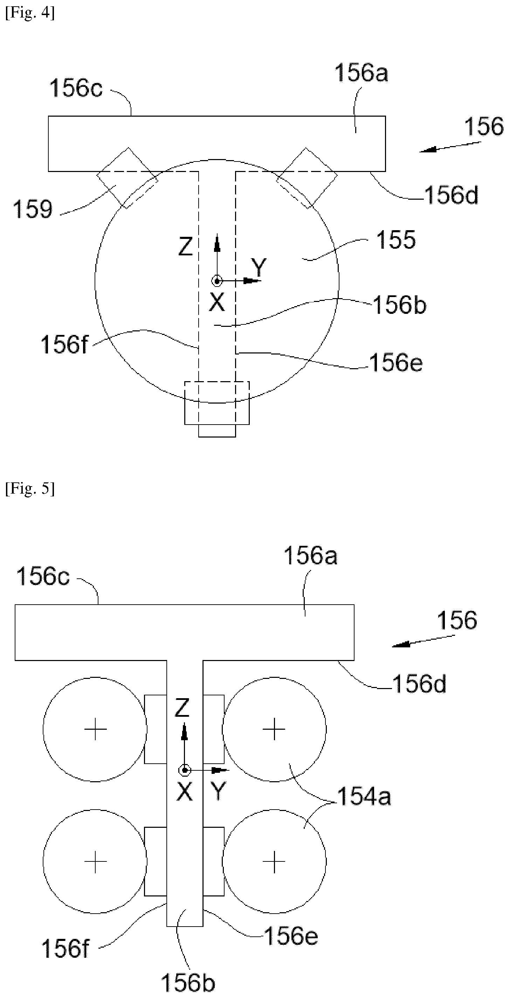

La Fig. 4 montre la coupe au niveau de la boîte de vitesse 155 qui est fixée par trois premiers moyens de fixation 159 destinés à limiter le transfert des vibrations dues aux mouvements de l'hélice 152 au châssis 156. Il y a ici un premier moyen de fixation 159 fixé entre la boîte de vitesse 155 et une extrémité basse de la structure verticale 156b et, de part et d'autre de la structure verticale 156b, un premier moyen de fixation 159 fixé entre la boîte de vitesse 155 et la structure horizontale 156a.

Chaque premier moyen de fixation 159 est par exemple du type Silentbloc^{®}, c'est-à-dire comportant une âme en matériau souple comme du caoutchouc et deux tiges filetées solidaires de l'âme et dont l'une est fixée à la boîte de vitesse 155 et dont l'autre est fixée à la structure horizontale 156a ou à la structure verticale 156b.

Ce châssis 156 en T offre également un intérêt pour une installation de trois attaches de la boîte de vitesse 155 (ici les premiers moyens de fixation 159) qui sont souples ou rigides afin d'assurer une transmission directe des efforts de la boîte de vitesse 155 vers le châssis 156.

La Fig. 5 montre la coupe au niveau des moteurs électriques 154a. Dans le mode de réalisation de l'invention présenté ici, il y a quatre moteurs électriques 154a et ils sont fixés par paire de part et d'autre de la structure verticale 156b contre les surfaces latérales bâbord 156e et tribord 156f.

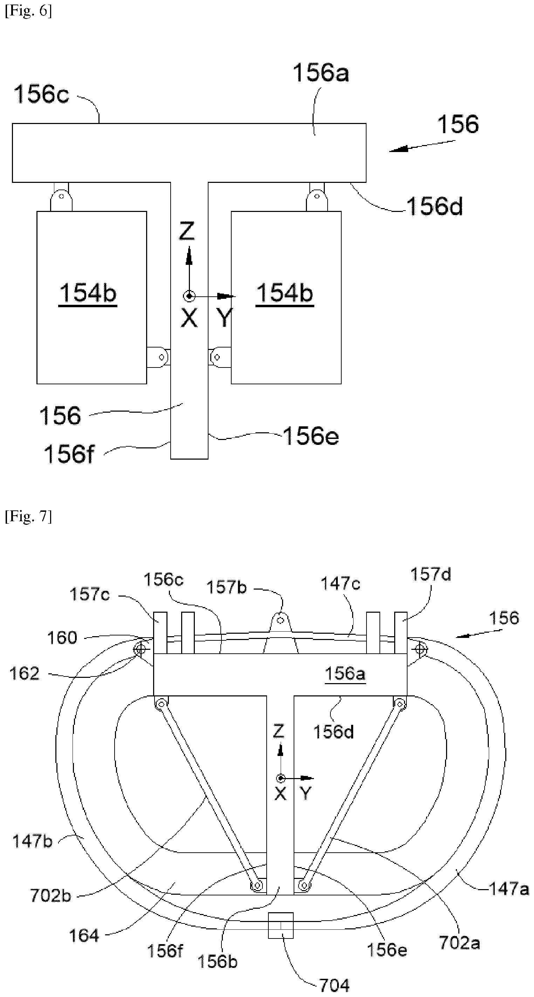

La Fig. 6 montre la coupe au niveau des piles à combustible 154b. Dans le mode de réalisation de l'invention présenté ici, il y a deux piles à combustible 154b qui sont fixées de part et d'autre de la structure verticale 156b contre les surfaces latérales bâbord 156e et tribord 156f et à la surface inférieure 156d.

La Fig. 7 montre la coupe au niveau des points latéraux de fixation 157c-d. Le système de propulsion 150 comporte de part et d'autre de la structure verticale 156b, une bielle 702a-b. Il y a ainsi une bielle bâbord 702a et une bielle tribord 702b.

Chaque bielle 702a-b est arrangée dans un plan vertical YZ, c'est-à-dire un plan perpendiculaire à la direction longitudinale X et à la verticale des points latéraux de fixation 157c-d.

Chaque bielle 702a-b présente une première extrémité fixée à la surface inférieure 156d de la structure horizontale 156a au niveau de l'extrémité latérale de la structure horizontale 156a et une deuxième extrémité fixée à une surface latérale de la structure verticale 156b, ici au niveau d'une extrémité basse de la structure verticale 156b. La surface inférieure 156d est la face opposée à la surface supérieure 156c de la structure horizontale 156a portant les points de fixation 157a-d.

La bielle bâbord 702a est ainsi fixée entre l'extrémité bâbord de la structure horizontale 156a et la surface latérale bâbord 156e de la structure verticale 156b et la bielle tribord 702b est ainsi fixée entre l'extrémité tribord de la structure horizontale 156a et la surface latérale tribord 156f de la structure verticale 156b.

Chaque fixation d'une extrémité d'une bielle 702a-b est assurée ici par un système de chape.

Les bielles 702a-b assurent une reprise des efforts verticaux.

Des bielles similaires peuvent également être mises en place vers l'avant par rapport aux points latéraux de fixation 157c-d, c'est-à-dire ici au niveau des piles à combustible 154b et des moteurs électriques 154a.

De part et d'autre du châssis 156, la nacelle 149 présente des capots latéraux 147a-b et chaque capot latéral 147a-b est monté mobile en rotation sur la structure horizontale 156a autour d'un axe de pivot 162 qui est globalement parallèle à la direction longitudinale X. Dans le mode de réalisation de l'invention présenté à la Fig. 2, de chaque côté de la structure horizontale 156a, il y a un capot avant et un capot arrière disposés l'un derrière l'autre parallèlement à la direction longitudinale X.

Chaque capot latéral 147a-b est mobile entre une position fermée dans laquelle les capots latéraux 147a-b sont abaissés de manière à ce que le châssis 156 et le système de propulsion 150 soient enfermés entres les capots latéraux 147a-b et une position ouverte dans laquelle les capots latéraux 147a-b sont relevés de manière à ce que le châssis 156 et le système de propulsion 150 soient accessibles sur les côtés.

Pour réaliser la liaison pivot autour de l'axe de pivot 162, des charnières sont disposées le long des bords bâbord et tribord de la structure horizontale 156a où chaque charnière présente une partie fixe 160 solidaire d'un bord bâbord ou tribord de la structure horizontale 156a et une partie mobile solidaire du capot latéral 147a-b. Les deux parties 160 sont classiquement solidarisées par un axe qui les traverse toutes les deux. Les bords bâbord et tribord de la structure horizontale 156a sont globalement parallèles à la direction longitudinale X.

Classiquement, pour verrouiller les capots latéraux 147a-b, des serrures 704 sont prévues pour verrouiller entre elles, à 6 heures, les extrémités libres des capots latéraux 147a-b.

Dans le mode de réalisation de l'invention présenté à la Fig. 7, la nacelle 149 comporte également un capot supérieur 147c qui est fixé sur le châssis 156 entre les capots latéraux 147a-b. Le capot supérieur 147c est fixé par tous moyens appropriés comme des vis, des rivets, etc.

Pour compléter l'aérodynamisme de l'ensemble propulsif 151, la nacelle 149 peut comporter d'autres capots fixés au châssis 156.

Dans le mode de réalisation de l'invention présenté sur les Figs. 2, 3 et 7, l'ensemble propulsif 151 présente de part et d'autre de la structure verticale 156b, des arches 164, ici au nombre de trois par côté, qui sont réparties le long des bords bâbord et tribord de la structure horizontale 156a et où chacune présente une première extrémité fixée au bord bâbord ou tribord de la structure horizontale 156a et une deuxième extrémité fixée à une extrémité basse de la structure verticale 156b au niveau de la surface latérale bâbord 156e ou tribord 156f de la structure verticale 156b.

Dans le mode de réalisation de l'invention présenté aux Figs. 2, 3 et 7, chaque première extrémité d'une arche 164 est fixée contre le flanc latéral de la structure horizontale 156a, mais dans un autre mode de réalisation, elle peut être fixée au niveau de la surface inférieure 156d.

Ces arches 164 sont ici de forme arquée mais elles peuvent prendre une forme différente, par exemple rectangulaire.

Ces arches 164 peuvent être mises en place pour assurer un renfort structurel, mais elles servent principalement comme éléments de support et de maintien pour les capots latéraux 147a-b lorsqu'ils sont en position fermée. Les capots latéraux 147a-b viennent ainsi en appui contre les arches 164 en position fermée.

Certaines arches 164 peuvent être disposées de manière à se trouver entre deux éléments propulsifs 154a-d parallèlement au bord bâbord ou tribord de la structure horizontale 156a, comme par exemple ici entre les piles à combustible 154b et le système de refroidissement 154d et entre le système de refroidissement 154d et le réservoir 154c. Ce type d'architecture avec des structures verticales, horizontales et axiales offre de nombreuses possibilités de ségrégations de zones séparées par des zones coupe-feu.

Des parois coupe-feu 166 peuvent être mises en place à l'intérieur des arches 164 pour limiter la progression d'un éventuel incendie entre les deux éléments propulsifs 154a-d disposés de part et d'autre de ladite arche 164.

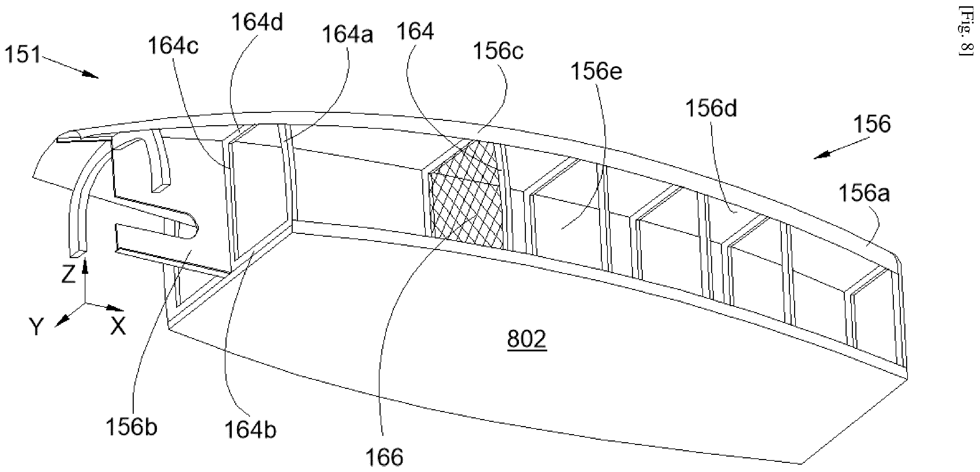

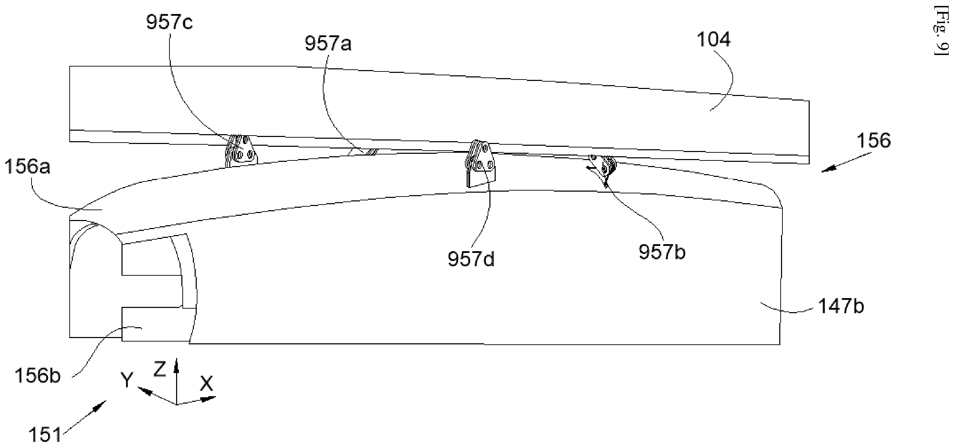

Dans la variante de réalisation présentée aux Figs. 8 et 9, la face supérieure 156c de la structure horizontale 156b présente une forme aérodynamique, ce qui permet de s'affranchir de la mise en place du capot supérieur 147c, d'où un gain de poids.

Dans le mode de réalisation de la variante, les arches 164 sont en L avec une branche verticale 164a fixée par une première extrémité bord bâbord ou tribord de la structure horizontale 156a au niveau de la surface inférieure 156d et une branche horizontale 164b fixée par une deuxième extrémité à une extrémité basse de la structure verticale 156b au niveau de la surface latérale bâbord 156e ou tribord 156f de la structure verticale 156b. La branche verticale 164a et la branche horizontale 164b sont solidarisées au niveau de leurs deux autres extrémités.

Dans le mode de réalisation de l'invention présenté à la Fig. 8, chaque arche 164 est complétée par une autre branche verticale 164c et une autre branche horizontale 164d pour former un cadre, où ladite autre branche verticale 164c est solidaire de la surface latérale bâbord 156e ou tribord 156f de la structure verticale 156b et où ladite autre branche horizontale 164d est solidaire de la surface inférieure 156d de la structure horizontale 156a.

Une paroi coupe-feu 166 peut également être mise en place dans certaines arches 164.

L'ensemble propulsif 151 présente également un plancher 802 qui est horizontal et qui est fixé au niveau de l'extrémité basse de la structure verticale 156b, c'est-à-dire parallèlement à la structure horizontale 156a et à l'opposé de ce dernier par rapport à la structure verticale 156b.

Un tel plancher 802 permet également la mise en place d'éléments propulsifs du système de propulsion 150.

Dans le mode de réalisation de la variante présenté à la Fig. 8, le plancher 802 est fixé aux branches horizontales 164b.

Dans le mode de réalisation de la variante présenté à la Fig. 9, la fixation de la structure horizontale 156a à la structure de l'aile 104 est assurée par quatre points de fixation 957a-d répartis par paire à bâbord et à tribord, et l'un devant l'autre pour chaque paire selon la direction longitudinale X, à savoir deux points avant de fixation 957a-b (bâbord et tribord) et deux points arrière de fixation 957c-d (bâbord et tribord) qui sont disposés au voisinage de l'arrière de la structure horizontale 156a ou vers le milieu de la structure horizontale 156a.

Chaque point de fixation 957a-d prend la forme d'une manille fixée par un point d'articulation à la structure de l'aile 104 et par un ou deux points d'articulation à la structure horizontale 156a.

Chaque manille correspondant à un point avant de fixation 957a-b est montée articulée par un point avant d'articulation à la structure horizontale 156a et par un point avant d'articulation à la structure de l'aile 104, et chaque point avant d'articulation consiste en une rotation autour d'un axe de rotation parallèle à la direction longitudinale X, c'est-à-dire que chaque manille est inscrite dans un plan perpendiculaire à la direction longitudinale X. Les points avant de fixation 957a-b compensent les efforts en Y et en Z.

Chaque manille correspondant à un point arrière de fixation 957c-d est montée articulée par deux points arrière d'articulation à la structure horizontale 156a et par un point arrière d'articulation à la structure de l'aile 104, et chaque point arrière d'articulation consiste en une rotation autour d'un axe horizontal de rotation présentant un angle non nul avec la direction longitudinale X, c'est-à-dire que chaque manille est inscrite dans un plan vertical oblique par rapport à la direction longitudinale X. Les points arrière de fixation 957c-d compensent les efforts en X et en Z. L'angle est compris entre 30° et 60°, c'est-à-dire que les manilles sont inclinées de l'extérieur vers l'intérieur en progressant de l'arrière vers l'avant.

Cette orientation particulière permet de prendre avantage du bras de levier de la structure horizontale 156a tout en conservant un système isostatique. Cette orientation particulière est décrite plus particulièrement dans le cadre de la variante mais elle peut s'appliquer également au mode de réalisation des Figs. 2 et 3 et, dans ce cas, les points latéraux de fixation sont constitués par les points avant de fixation 957a-b.

La Fig. 10 montre un mode de réalisation particulier pour la fixation de la boîte de vitesse 155 au châssis 156. On y retrouve les trois premiers moyens de fixation 159 entre la boîte de vitesse 155 et, d'une part, une extrémité basse de la structure verticale 156b et, d'autre part, la structure horizontale 156a. Chaque premier moyen de fixation 159 crée une liaison sphère cylindre.

Dans ce mode de réalisation, l'ensemble propulsif 151 comporte également un système de reprise 1002 assurant une reprise des moments générés par les moteurs électriques 154a sur la boîte de vitesse 155.

Le système de reprise d'effort 1002 comporte à bâbord, une barre bâbord 1004 globalement verticale et dont une première extrémité est solidaire de la boîte de vitesse 155 et une barre tribord 1006 globalement verticale et dont une première extrémité est solidaire de la boîte de vitesse 155.

Le système de reprise d'effort 1002 comporte une barre principale 1008 orientée parallèlement à la direction transversale Y, où la deuxième extrémité de la barre bâbord 1004 est liée à la barre principale 1008 par une liaison sphère cylindre et où la deuxième extrémité de la barre tribord 1006 est liée à la barre principale 1008 par une liaison rotule.

Chaque extrémité de la barre principale 1008 est solidaire du châssis 156 à travers deux liaisons rotule en série.

## Revendications

1. Ensemble propulsif (151) pour un aéronef (100) présentant une direction longitudinale (X) et comportant :
- un châssis (156),
- une boîte de vitesse (155) comprenant un arbre de sortie (155a), ledit arbre portant une hélice (152), et
- un système de propulsion (150) comportant au moins les éléments propulsifs suivants : au moins un moteur électrique (154a), chacun des au moins un moteur électrique ayant un arbre moteur mécaniquement couplé à la boîte de vitesse (155), au moins une pile à combustible (154b) configurée pour alimenter électriquement ledit au moins un moteur électrique (154a), et au moins un réservoir (154c) configuré pour alimenter en dihydrogène ladite au moins une pile à combustible (154b),
ledit ensemble propulsif (151) étant **caractérisé en ce que** le châssis (156) présente un profil en T avec une structure horizontale (156a) et une structure verticale (156b), **en ce que** la boite de vitesse (155) est fixée à l'avant du châssis (156) par des premiers moyens de fixation (159) et **en ce que** les éléments propulsifs (154a-c) sont fixés sous la structure horizontale (156a) et contre la structure verticale (156b) par des deuxièmes moyens de fixation.

2. Ensemble propulsif (151) selon la revendication 1, **caractérisé en ce qu'**il y a un seul réservoir (154c) fixé sous la structure horizontale (156a) au niveau d'une extrémité arrière de ce dernier.

3. Ensemble propulsif (151) selon l'une des revendications 1 ou 2, **caractérisé en ce qu'**il y a un premier moyen de fixation (159) fixé entre la boîte de vitesse (155) et une extrémité basse de la structure verticale (156b) et, de part et d'autre de la structure verticale (156b), un premier moyen de fixation (159) fixé entre la boîte de vitesse (155) et la structure horizontale (156a).

4. Ensemble propulsif (151) selon l'une des revendications 1 à 3, **caractérisé en ce qu'**il comporte des points latéraux de fixation (157c-d) solidaires d'une surface supérieure (156c) de la structure horizontale (156a) et destinés à assurer la fixation de la structure horizontale (156a) à une structure d'une aile (104) de l'aéronef (100), une bielle bâbord (702a) et une bielle tribord (702b) où les bielles (702a-b) sont arrangées à la verticale des points latéraux de fixation (157c-d), où la bielle bâbord (702a) est fixée entre une extrémité bâbord de la structure horizontale (156a) au niveau d'une surface inférieure (156d) de la structure horizontale (156a) et une surface latérale bâbord (156e) de la structure verticale (156b) et où la bielle tribord (702b) est fixée entre une extrémité tribord de la structure horizontale (156a) au niveau d'une surface inférieure (156d) de la structure horizontale (156a) et une surface latérale tribord (156f) de la structure verticale (156b).

5. Ensemble propulsif (151) selon l'une des revendications 1 à 4, **caractérisé en ce qu'**il comporte de part et d'autre du châssis (156), au moins un capot latéral (147a-b) monté mobile en rotation sur la structure horizontale (156a) autour d'un axe de pivot (162) et **en ce que** pour chaque capot latéral (147a-b), l'ensemble propulsif (151) comporte des charnières dont une partie fixe (160) est solidaire de la structure horizontale (156a) et une partie mobile solidaire du capot latéral (147a-b).

6. Ensemble propulsif (151) selon la revendication 5, **caractérisé en ce qu'**il comporte de part et d'autre de la structure verticale (156b), des arches (164) qui sont réparties le long des bords bâbord et tribord de la structure horizontale (156a) et où chacune présente une première extrémité fixée au bord bâbord ou tribord de la structure horizontale (156a) et une deuxième extrémité fixée à une extrémité basse de la structure verticale (156b) au niveau d'une surface latérale bâbord (156e) ou tribord (156f) de la structure verticale (156b).

7. Ensemble propulsif (151) selon la revendication 6, **caractérisé en ce que** certaines arches (164) sont disposées de manière à se trouver entre deux éléments propulsifs (154a-d) parallèlement au bord bâbord ou tribord de la structure horizontale (156a), et **en ce qu'**une paroi coupe-feu (166) est mise en place à l'intérieur desdites certaines arches (164).

8. Ensemble propulsif (151) selon l'une des revendications 5 à 7, **caractérisé en ce qu'**il comporte un capot supérieur (147c) fixé sur le châssis (156) entre les capots latéraux (147a-b).

9. Ensemble propulsif (151) selon l'une des revendications 1 à 8, **caractérisé en ce qu'**il comporte un plancher (802) fixé au niveau d'une extrémité basse de la structure verticale (156b), parallèlement à la structure horizontale (156a) et à l'opposé de ce dernier par rapport à la structure verticale (156b).

10. Ensemble propulsif (151) selon l'une des revendications 1 à 9, **caractérisé en ce qu'**il comporte quatre points de fixation (957a-d) répartis par paire à bâbord et à tribord, et l'un devant l'autre pour chaque paire, chaque point de fixation (957a-d) prenant la forme d'une manille, où chaque manille correspondant à un point avant de fixation (957a-b) est montée articulée par un point avant d'articulation à la structure horizontale (156a) et destinée à être montée articulée par un point avant d'articulation à la structure de l'aile (104), où chaque point avant d'articulation consiste en une rotation autour d'un axe de rotation parallèle à la direction longitudinale (X), où chaque manille correspondant à un point arrière de fixation (957c-d) est montée articulée par deux points arrière d'articulation à la structure horizontale (156a) et destinée à être montée articulée par un point arrière d'articulation à la structure de l'aile (104), et où chaque point arrière d'articulation consiste en une rotation autour d'un axe horizontal de rotation présentant un angle non nul avec la direction longitudinale (X).

11. Aéronef (100) comportant au moins un ensemble propulsif (151) selon l'une des revendications précédentes.

## Patentansprüche

1. Antriebsanordnung (151) für ein Flugzeug (100), die eine Längsrichtung (X) aufweist und Folgendes umfasst:
- einen Rahmen (156),
- ein Getriebe (155), das eine Abtriebswelle (155a) beinhaltet, wobei die Welle einen Propeller (152) trägt, und
- ein Antriebssystem (150), das mindestens die folgenden Antriebselemente umfasst: mindestens einen Elektromotor (154a), wobei jeder des mindestens einen Elektromotors eine mit dem Getriebe (155) mechanisch gekoppelte Motorwelle aufweist, mindestens eine Brennstoffzelle (154b), die dazu konfiguriert ist, den mindestens einen Elektromotor (154a) mit Strom zu versorgen, und mindestens einen Tank (154c), der dazu konfiguriert ist, die mindestens eine Brennstoffzelle (154b) mit Wasserstoff zu versorgen,
wobei die Antriebsanordnung (151) **dadurch gekennzeichnet ist, dass** der Rahmen (156) ein T-Profil mit einer horizontalen Struktur (156a) und einer vertikalen Struktur (156b) aufweist, dass das Getriebe (155) durch erste Befestigungsmittel (159) an der Vorderseite des Rahmens (156) befestigt ist und dass die Antriebselemente (154a-c) durch zweite Befestigungsmittel unter der horizontalen Struktur (156a) und an der vertikalen Struktur (156b) befestigt sind.

2. Antriebsanordnung (151) nach Anspruch 1, **dadurch gekennzeichnet, dass** es einen einzigen Tank (154c) gibt, der unter der horizontalen Struktur (156a) an einem hinteren Ende derselben befestigt ist.

3. Antriebsanordnung (151) nach einem der Ansprüche 1 oder 2, **dadurch gekennzeichnet, dass** es ein erstes Befestigungsmittel (159), das zwischen dem Getriebe (155) und einem unteren Ende der vertikalen Struktur (156b) befestigt ist, und, auf beiden Seiten der vertikalen Struktur (156b), ein erstes Befestigungsmittel (159), das zwischen dem Getriebe (155) und der horizontalen Struktur (156a) befestigt ist, gibt.

4. Antriebsanordnung (151) nach einem der Ansprüche 1 bis 3, **dadurch gekennzeichnet, dass** sie seitliche Befestigungspunkte (157c-d), die mit einer oberen Fläche (156c) der horizontalen Struktur (156a) fest verbunden und dazu bestimmt sind, die Befestigung der horizontalen Struktur (156a) an einer Struktur einer Tragfläche (104) des Flugzeugs (100) zu gewährleisten, eine backbordseitige Stange (702a) und eine steuerbordseitige Stange (702b) umfasst, wobei die Stangen (702a-b) vertikal unter den seitlichen Befestigungspunkten (157cd) arrangiert sind, wobei die backbordseitige Stange (702a) zwischen einem backbordseitigen Ende der horizontalen Struktur (156a) an einer unteren Fläche (156d) der horizontalen Struktur (156a) und einer backbordseitigen seitlichen Fläche (156e) der vertikalen Struktur (156b) befestigt ist und wobei die steuerbordseitige Stange (702b) zwischen einem steuerbordseitigen Ende der horizontalen Struktur (156a) an einer unteren Fläche (156d) der horizontalen Struktur (156a) und einer steuerbordseitigen seitlichen Fläche (156f) der vertikalen Struktur (156b) befestigt ist.

5. Antriebsanordnung (151) nach einem der Ansprüche 1 bis 4, **dadurch gekennzeichnet, dass** sie auf beiden Seiten des Rahmens (156) mindestens eine seitliche Haube (147ab) umfasst, die um eine Schwenkachse (162) drehbeweglich an der horizontalen Struktur (156a) montiert ist, und dass die Antriebsanordnung (151) für jede seitliche Haube (147a-b) Scharniere umfasst, von denen ein fester Teil (160) mit der horizontalen Struktur (156a) fest verbunden ist und ein beweglicher Teil mit der seitlichen Haube (147a-b) fest verbunden ist.

6. Antriebsanordnung (151) nach Anspruch 5, **dadurch gekennzeichnet, dass** sie auf beiden Seiten der vertikalen Struktur (156b) Bögen (164) umfasst, die entlang des backbordseitigen und steuerbordseitigen Rands der horizontalen Struktur (156a) verteilt sind, und wobei jeder ein erstes Ende, das an dem backbordseitigen oder steuerbordseitigen Rand der horizontalen Struktur (156a) befestigt ist, und ein zweites Ende, das an einem unteren Ende der vertikalen Struktur (156b) an einer backbordseitigen (156e) oder steuerbordseitigen (156f) seitlichen Fläche der vertikalen Struktur (156b) befestigt ist, aufweist.

7. Antriebsanordnung (151) nach Anspruch 6, **dadurch gekennzeichnet, dass** gewisse Bögen (164) so angeordnet sind, dass sie sich zwischen zwei Antriebselementen (154a-d) parallel zum backbordseitigen oder steuerbordseitigen Rand der horizontalen Struktur (156a) befinden und dass innerhalb dieser gewissen Bögen (164) eine Brandschutzwand (166) eingerichtet ist.

8. Antriebsanordnung (151) nach einem der Ansprüche 5 bis 7, **dadurch gekennzeichnet, dass** sie eine obere Haube (147c) umfasst, die zwischen den seitlichen Hauben (147ab) an dem Rahmen (156) befestigt ist.

9. Antriebsanordnung (151) nach einem der Ansprüche 1 bis 8, **dadurch gekennzeichnet, dass** sie einen Boden (802) umfasst, der an einem unteren Ende der vertikalen Struktur (156b) parallel zu der horizontalen Struktur (156a) und, bezogen auf die vertikale Struktur (156b), zu dieser entgegengesetzt befestigt ist.

10. Antriebsanordnung (151) nach einem der Ansprüche 1 bis 9, **dadurch gekennzeichnet, dass** sie vier Befestigungspunkte (957a-d) umfasst, die backbordseitig und steuerbordseitig paarweise und, für jedes Paar, einer vor dem anderen verteilt sind, wobei jeder Befestigungspunkt (957a-d) die Form eines Bügels aufweist, wobei jeder Bügel, der einem vorderen Befestigungspunkt (957a-b) entspricht, durch einen vorderen Anlenkpunkt an der horizontalen Struktur (156a) angelenkt ist und dazu bestimmt ist, durch einen vorderen Anlenkpunkt an der Struktur der Tragfläche (104) angelenkt zu werden, wobei jeder vordere Anlenkpunkt über eine Drehung um eine Drehachse parallel zu der Längsrichtung (X) verfügt, wobei jeder Bügel, der einem hinteren Befestigungspunkt (957c-d) entspricht, durch zwei hintere Anlenkpunkte an der horizontalen Struktur (156a) angelenkt ist und dazu bestimmt ist, durch einen hinteren Anlenkpunkt an der Struktur der Tragfläche (104) angelenkt zu werden, und wobei jeder hintere Anlenkpunkt über eine Drehung um eine horizontale Drehachse, die einen Winkel ungleich Null mit der Längsrichtung (X) bildet, verfügt.

11. Flugzeug (100), das mindestens eine Antriebsanordnung (151) nach einem der vorhergehenden Ansprüche umfasst.

## Claims

1. Propulsion assembly (151) for an aircraft (100), having a longitudinal direction (X) and having:
- a chassis (156),
- a gearbox (155) comprising an output shaft (155a), said shaft bearing a propeller (152), and
- a propulsion system (150) having at least the following propulsion elements: at least one electric motor (154a), each of the at least one electric motor having a drive shaft mechanically coupled to the gearbox (155), at least one fuel cell (154b) configured to electrically power said at least one electric motor (154a), and at least one tank (154c) configured to supply said at least one fuel cell (154b) with dihydrogen,
said propulsion assembly (151) being **characterized in that** the chassis (156) has a T-shaped profile with a horizontal structure (156a) and a vertical structure (156b), **in that** the gearbox (155) is fastened to the front of the chassis (156) by first fastening means (159), and **in that** the propulsion elements (154a-c) are fastened beneath the horizontal structure (156a) and against the vertical structure (156b) by second fastening means.

2. Propulsion assembly (151) according to Claim 1, **characterized in that** there is a single tank (154c) fastened beneath the horizontal structure (156a) at a rear end thereof.

3. Propulsion assembly (151) according to either of Claims 1 and 2, **characterized in that** there is one first fastening means (159) fastened between the gearbox (155) and a bottom end of the vertical structure (156b) and, on either side of the vertical structure (156b), one first fastening means (159) fastened between the gearbox (155) and the horizontal structure (156a).

4. Propulsion assembly (151) according to one of Claims 1 to 3, **characterized in that** it has lateral fastening points (157c-d) as one with an upper surface (156c) of the horizontal structure (156a) and intended to fasten the horizontal structure (156a) to a structure of a wing (104) of the aircraft (100), a port rod (702a) and a starboard rod (702b), wherein the rods (702a-b) are arranged vertically in line with the lateral fastening points (157c-d), wherein the port rod (702a) is fastened between a port end of the horizontal structure (156a) at a lower surface (156d) of the horizontal structure (156a) and a port lateral surface (156e) of the vertical structure (156b) and wherein the starboard rod (702b) is fastened between a starboard end of the horizontal structure (156a) at a lower surface (156d) of the horizontal structure (156a) and a starboard lateral surface (156f) of the vertical structure (156b).

5. Propulsion assembly (151) according to one of Claims 1 to 4, **characterized in that** it has, on either side of the chassis (156), at least one lateral cowl (147a-b) mounted so as to be able to move in rotation on the horizontal structure (156a) about a pivot axis (162) and **in that**, for each lateral cowl (147a-b), the propulsion assembly (151) has hinges, of which a fixed part (160) is as one with the horizontal structure (156a) and a mobile part as one with the lateral cowl (147a-b).

6. Propulsion assembly (151) according to Claim 5, **characterized in that** it has, on either side of the vertical structure (156b), arches (164) that are distributed along the port and starboard edges of the horizontal structure (156a), and wherein each one has a first end fastened to the port or starboard edge of the horizontal structure (156a) and a second end fastened to a bottom end of the vertical structure (156b) at a port (156e) or starboard (156f) lateral surface of the vertical structure (156b).

7. Propulsion assembly (151) according to Claim 6, **characterized in that** certain arches (164) are disposed so as to be between two propulsion elements (154a-d) parallel to the port or starboard edge of the horizontal structure (156a), and **in that** a fire break wall (166) is put in place inside said certain arches (164).

8. Propulsion assembly (151) according to one of Claims 5 to 7, **characterized in that** it has an upper cowl (147c) fastened to the chassis (156) between the lateral cowls (147a-b).

9. Propulsion assembly (151) according to one of Claims 1 to 8, **characterized in that** it has a floor (802) fastened at a bottom end of the vertical structure (156b), parallel to the horizontal structure (156a) and opposite the latter with respect to the vertical structure (156b).

10. Propulsion assembly (151) according to one of Claims 1 to 9, **characterized in that** it has four fastening points (957a-d) distributed in pairs on the port side and on the starboard side and one in front of the other for each pair, each fastening point (957a-d) taking the form of a shackle, wherein each shackle corresponding to a front fastening point (957a-b) is mounted articulated by one front articulation point to the horizontal structure (156a) and intended to be mounted articulated by one front articulation point to the structure of the wing (104), wherein each front articulation point consists of a rotation about an axis of rotation parallel to the longitudinal direction (X), wherein each shackle corresponding to a rear fastening point (957c-d) is mounted articulated by two rear articulation points to the horizontal structure (156a) and intended to be mounted articulated by one rear articulation point to the structure of the wing (104) and wherein each rear articulation point consists of a rotation about a horizontal axis of rotation having a non-zero angle with the longitudinal direction (X).

11. Aircraft (100) having at least one propulsion assembly (151) according to one of the preceding claims.
